# EUROPEAN PATENT APPLICATION

(11) **EP 3 708 389 A1**
(43) Date of publication of application: **16.09.2020**
(21) Application number: 18877097.8
(22) Date of filing: 29.04.2018
(51) Int. Cl.: B60C 11/16, C04B 35/10, C04B 35/645

(54) **TIRE STUD AND MANUFACTURING METHOD THEREFOR**

(30) Priority: 07.11.2017 KR 20170147335
(71) Applicant: Moon, Dae Yong, Seoul 06347 (KR); Jung, Won Hee, Seoul 06347 (KR)
(72) Inventor: Moon, Dae Yong, Seoul 06347 (KR); Jung, Won Hee, Seoul 06347 (KR)
(74) Representative: M. Zardi & Co S.A.
(86) International application number: PCT/KR2018/004976
(87) International publication number: WO 2019/093605

(57) **Abstract**

A tire stud according to the present invention is manufactured from ceramic, and thus has characteristics of causing the strength of ceramics to recover through crack healing while lowering residual stress by improving a sintering process. In addition, abrasion resistance is improved by further adding a sintering aid and an organic oxide during sintering, and thus friction with a road surface can always be maintained to be constant and life span can be greatly increased.

## Description

### Technical Field

The present invention relates to a tire stud and a manufacturing method therefor, and more specifically, to a tire stud and a manufacturing method for the tire stud that is inserted into a car tire to have a part exposed such that running can be performed over frozen snow, ice, a rainy road, a snowy road, or the like through all seasons and, particularly, that has improved physical strength while still maintaining an anti-slip effect in terms of safety.

### Background Art

Vehicles operated by users are composed of many parts, and among them, tires substantially affect the driving of a vehicle, and in particular, can be said to be one of the key parts for securing the safety of users. Especially, due to the development of the industry, the movement of logistics and the amount of work of individuals have been increased, and accordingly, the number of automobiles is gradually increased due to the increase in movement thereof and the increase in leisure life.

On the other hand, the tire can maintain driving safety through friction with the road surface. When the driving thereof is not controlled by means of the driver according to the road surface state, that is, when the tire is not controlled as desired on the road surface, problems may arise in vehicle and driver safety. In particular, there is a limit in improving the stability thereof through a control of the tire when driving a vehicle on icy road, snow road, or rainy road etc.

In order to prevent the slippage of vehicle and to secure the stable braking and handling performance, several options have been proposed, and the stud tire is one of them.

The stud tire is a tire in which a special type of rivet is embedded in a tread portion of the tire, and began to be distributed in northern Europe such as Norway, Sweden, and Finland from the 1960s. In particular, when the snowy road melts due to the warm temperature during the day and then freezes again at night due to the temperature drop, or when the road freezes due to the sudden drop in temperature after rain, since it is very slippery due to a decrease in the friction coefficient, sufficient braking and handling performance cannot be secured with the tread pattern alone.

A stud provided in the stud tire is a kind of rivet that directly rubs against the road surface when driving a vehicle to increase the gripping force and the frictional force, and requires high rigidity due to its characteristics. However, the shape of the stud is often deformed or deviated by various conditions such as driving speed, driver's driving habits, and road conditions, which not only causes a drop in the gripping and friction force of the tire, but also acts as a cause of damage to the tire itself. In particular, when stress concentration occurs in a specific part of the tire due to the inertia of the tire itself depending on the driving direction of the vehicle, the stiffness of the tire itself deteriorates and abnormal abrasion may occur in specific parts of the tire and stud. However, studs that solve these problems have not been developed so far.

### Patent Literature

Patent Literature: Korean Patent Registration No. 10-1071046 (September 29, 2011).

### Disclosure

### Technical Problem

The present invention is made to solve the above-described problem and, specifically, an object thereof is to provide a tire stud and a manufacturing method for the tire stud that is inserted into a car tire to have a part exposed such that running can be performed over frozen snow, ice, a rainy road, a snowy road, or the like through all seasons and, particularly, that has improved physical strength while still maintaining an anti-slip effect in terms of safety.

### Technical solution

According to one aspect of the present invention so as to accomplish these objects, there is provided to a tire stud including: a main body; a support positioned at a lower end of the main body; and a fastening portion that is positioned at an upper end of the main body and is formed to have one surface sunken toward a center of the main body by a certain degree or more, wherein the main body, the support, and the fastening portion are manufactured by putting one or two or more ceramics selected from the group consisting of silicon oxide, silicon carbide, silicon nitride, silicon alumina nitride, aluminum oxide, zirconium oxide, and cordierite in a mold and sintering.

According to one aspect of the present invention, the ceramics are obtained by mixing 50 to 85 wt% of aluminum oxide and 15 to 50 wt% of one or two more ceramics selected from the group consisting of silicon oxide, silicon carbide, silicon nitride, silicon alumina nitride, zirconium oxide, and cordierite.

According to one aspect of the present invention, with respect to 100 parts by weight of the ceramics, 0.1 to 5 parts by weight of one or two or more sintering aids selected from the group consisting of lanthanum aluminum oxide, yttrium aluminum oxide, rhenium-aluminum oxide, samarium-aluminum oxide, neodymium aluminum oxide, yttrium oxide, and scandium oxide are added.

According to one aspect of the present invention the ceramics have an average grain size of 0.1 to 50 µm.

According to one aspect of the present invention, the main body, the support, and the fastening portion are manufactured by putting a ceramic in a mold and then sintering under pressure of 1 to 50 MPa at a temperature of 1,500 to 2,000°C for one to three hours.

### Advantageous Effects

According to the tire stud of the present invention, the tire stud is manufactured from ceramic having the above composition, and thus has characteristics of causing the strength of ceramics to recover through crack healing while lowering residual stress by improving a sintering process. In addition, abrasion resistance is improved by further adding a sintering aid and an organic oxide during sintering, and thus friction with a road surface can always be maintained to be constant and life span can be greatly increased.

### Brief Description of Drawings

The above and other objects, features and advantages of the present invention will be more apparent from the following detailed description taken in conjunction with the accompanying drawings, in which:
FIG. 1 is a perspective view of a tire stud with a pin portion removed;
FIG. 2 is a perspective view of a tire stud with a pin portion coupled; and
FIG. 3 is a cross-sectional view of a tire with a tire stud inserted.

### [Reference Signs List]

- 100:: stud
- 110:: main body
- 120:: support
- 130:: fastening portion
- 140:: pin
- 200:: tire

### Best Mode

### Mode for Invention

Hereinafter, a method for manufacturing a tire stud according to the present invention will be described in detail with reference to specific examples. The following specific examples are provided as examples in order to sufficiently convey the spirit of the present invention to those skilled in the art.

Therefore, the present invention is not limited to the specific examples presented below, but may be embodied in other forms, and the specific examples presented below are only described to clarify the spirit of the present invention, and the present invention is not limited thereto.

At this time, unless differently defined, all the terms used here including technical or scientific terms have the same meaning with what is generally understood by one who has common knowledge in the technical field that this invention belongs to. The detailed description about the prior related technology will also be omitted when it is judged to blur the gist of this invention in explaining this invention.

In addition, the following drawings are provided as an example in order to sufficiently convey the spirit of the present invention to those skilled in the art. Therefore, the present invention is not limited to the drawings presented below and may be embodied in other forms, and the drawings presented below may be exaggerated to clarify the spirit of the present invention. Also, the same reference numbers throughout the specification indicate the same components.

Also, the singular expression used in the specification and the appended claims includes plural expressions unless it is apparently different in the context.

In addition, in describing the components of the present invention, terms such as first, second, A, B, (a), and (b) may be used. These terms are only for distinguishing the component from other components, and the nature or the order of the component is not limited by the terms. When it is mentioned to be "connected" or "linked" to the other component, a certain component may be connected or linked to the other component. However, it will be understood that there may be some other components between them.

A stud (100) according to the present invention is applied to a tire, and one or more studs can be inserted into the tire to have one surface exposed. In addition, the stud is applicable to various tires such as a snow tire, a general tire, or an all-season tire according to user needs.

A tire equipped with the stud has a higher friction coefficient than that of a general tire and a snow tire and enables safe running to be performed over a slippery snow-covered and rainy road and ice. Consequently, a short braking distance can be obtained to prevent an accident in advance. In addition, a force to grip a road surface increases and, thus, good turning performance is exhibited, and the tire has properties of higher traction and starting force than those of a chain-wound tire.

The present invention is made to prevent disadvantages such as damage, wear, or deformation of the stud due to an external force while enhancing above-described advantages of the stud, and to prevent the stud from being easily separated from the tire. Hence, by improving a sintering process with a sintering condition and a sintering additive of the ceramics, the stud can exhibit a property of restoring the strength of ceramics by crack healing while decreasing residual stress.

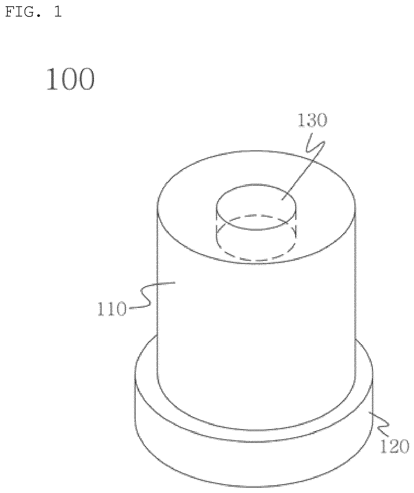

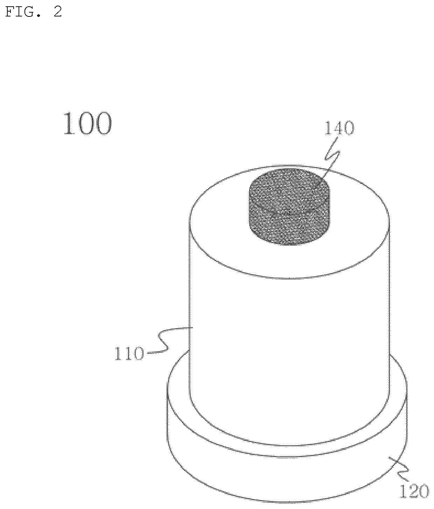

The stud (100) according to the present invention can include a main body (110), a support (120) positioned at a lower end of the main body, and a fastening portion (130) formed at an upper end of the main body to have one surface sunken toward a center of the main body by a certain degree or more (FIGS. 1 and 2) .

The main body (110) can be a member that is a main part of the stud. The main body maintains the stiffness of the stud and fulfills a function of absorbing a certain degree of more of impact transmitted to the tire from a road surface, and the fastening portion and the support are provided at the upper end and the lower end of the main body, respectively.

The size, shape, or the like of the main body is not limited, and the main body can have a cylindrical shape, for example. In addition, the main body can have a rod shape having a height longer than a width of one end thereof.

The main body may desirably have a width of 1 to 200 mm and a height of 1 to 200 mm. Within the range, a close contact force with the tire improves, and it is possible to prevent the stud from being separated, damaged, moved, or rotated from the tire due to pressure.

In addition, the main body can have a flange (not illustrated) which has a certain area by increasing a diameter from an outer diameter of an outer surface of the main body. The flange is provided to more firmly couple the stud to the tire. In addition to the flange, the main body can have an adhesive layer or a wire to increase a coupling force between the tire and the stud.

The support (120) is positioned at an underneath of surfaces of the main body, and thus the support can be positioned at a surface of the main body opposite to the fastening portion. When the stud is inserted into the tire, the support is positioned at the innermost side of the tire and thus fulfill a function of preventing the stud (100) from being separated from the tire (200) .

The size and shape of the support is not limited, it is desirable for the support to have a width of 1 to 200 mm and a height of 1 to 100 mm as an example. However, the support desirably has a width larger than that of the main body in order to increase the coupling force to the tire.

In addition, the support can have one or a plurality of projecting members (not illustrated) at one or more surfaces thereof as necessary. The projecting member is provided to improve a property of close contact with the tire and, particularly, can effectively distribute and support a force applied to the stud during cornering of a vehicle equipped with the tire so as to prevent the stud from being damaged or separated and can stably position the stud in the tire.

The position, shape, or number of projecting members is not limited. In addition, when a plurality of projecting members are provided, intervals between the projecting members are not limited. As a specific example, the projecting member can have a conical shape with a width which gradually decreases from one end adjacent to the support to the other end thereof, and the plurality of projecting members can be constantly separated at equal intervals.

The fastening portion (130) is provided to couple the stud (100) to a pin (140) and can be formed at one surface of the upper end of the main body to be sunken toward the center of the main body, the one surface being opposite to the support as illustrated in FIG. 1.

The fastening portion can further have, at an inner surface thereof, a fastening means having a shape which is couplable to the pin in order to improve a coupling force to the pin. Examples of the fastening means can include a thread, a coupling pin, a magnet, and the like, and the thread has the most excellent coupling force and thus is a desirable example.

The size and shape of the fastening portion is not limited, but it is desirable for the fastening portion to have a width of 1 to 200 mm and a height of 1 to 100 mm as an example. When the range is satisfied, it is possible to prevent the stud from being separated, damaged, moved, or rotated from the tire due to pressure.

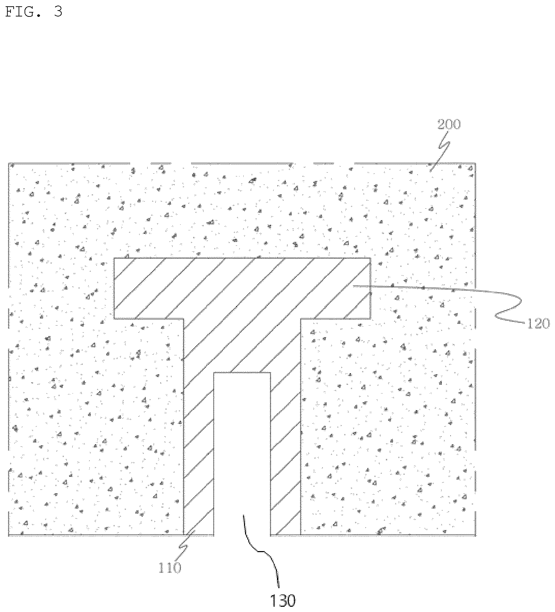

The pin (140) is provided in a vulcanization mold of the tire. When the fastening portion (130) of the ceramic stud (100) of the present invention is fitted on the pin (140), and the tire and the vulcanization mold are separated from each other after a tire curing process, the ceramic stud (100) is in a state embedded in a block part of tire tread (FIG. 3).

In the present invention, multiple studs (100) are manufactured in a state being inserted into the tire, with the fastening portion (130) being exposed, and thereby it is possible to obtain a higher friction coefficient to perform safe running even over a slippery snow-covered road, a rainy road and ice. Consequently, a braking distance can be shortened to prevent an accident in advance. In addition, a force to grip a road surface increases and, thus, good turning performance is exhibited, and the tire has characteristics of higher traction and starting force than those of a chain-wound tire.

Besides, the stud of the present invention is manufactured by differentiating ceramic composition and improving sintering condition, thereby having minimized damage, wear, deformation, or the like dur to external force, and thus the stud is not easily separated from the tire so as to be stably used for a long period.

The tire stud according to the present invention is characterized by being manufactured by putting one or two or more ceramics selected from the group consisting of silicon oxide, silicon carbide, silicon nitride, silicon alumina nitride, aluminum oxide, zirconium oxide, and cordierite in a mold and sintering.

In the present invention, the ceramics are base materials of the main body, the support, and the fastening portion. The ceramics have good physical stiffness and high chemical resistance, corrosion resistance, heat resistance, and the like and thus are desirable materials.

Examples of ceramics usable in the present invention can include one or two or more selected from the group consisting of silicon oxide (SiO₂), silicon carbide (SiC), silicon nitride (Si₃N₄) , silicon alumina nitride (SiAlON) , aluminum oxide (Al₂O₃), zirconium oxide (ZrO₂), and cordierite (Al₂O₃·MgO·SiO₂).

The ceramics are obtained desirably by mixing aluminum oxide and one or two or more ceramics selected from the group consisting of silicon oxide, silicon carbide, silicon nitride, silicon alumina nitride, zirconium oxide, and cordierite. In general, aluminum oxide has advantages of better sinterability, higher oxidation resistance, and relatively lower price than those of the other ceramics, but has disadvantages of more degraded mechanical properties at a high temperature and lower strength and a poorer tensile property than those of the other ceramics. In addition, the stud reaches a high temperature particularly due to friction, and thus it is not appropriate for the stud to be made only of aluminum oxide. Consequently, it is desirable to mis with other ceramics. In particular, a mixture of aluminum oxide with silicon carbide is desirable in that grain growth is inhibited in a grain sintering process such that the strength improves and an excellent crack healing property is achieved.

The ceramic composition is obtained desirably by mixing 50 to 85 wt% of aluminum oxide and 15 to 50 wt% of one or two or more ceramics selected from the group consisting of silicon oxide, silicon carbide, silicon nitride, silicon alumina nitride, zirconium oxide, and cordierite, and more desirably 60 to 80 wt% of aluminum oxide and 20 to 40 wt% of silicon carbide, by which the degradation of strength is prevented and crack healing property improves.

In the present invention, it is preferable that the ceramics have an average grain size of 0.1 to 50 µm. When the grain size is smaller than the above-described range, cohesiveness increases such that grains of the ceramics can grow ununiformly. When the grain size is larger than the above-described range, densification of the stud can be lowered during sintering and molding.

In addition, the ceramics can further include one or more sintering accelerators in order to more improve the sintering property. As the sintering accelerator, rare-earth metal, alkaline earth metal, oxides of aluminum, fluoride, chloride, or the like can be used, and it is desirable to use one or two or more rare-earth oxides selected from the group consisting of lanthanum aluminum oxide, yttrium aluminum oxide, rhenium-aluminum oxide, samarium-aluminum oxide, neodymium aluminum oxide, yttrium oxide, and scandium oxide. In particular, of the rare-earth oxides, yttrium oxide can accelerate sintering of aluminum oxide by a liquid reaction with aluminum oxide powder and thus is desirable to be used.

It is desirable that 0.1 to 5 parts by weight of the sintering accelerator be mixed with respect to 100 parts by weight of ceramics. When less than 0.1 parts by weight of the sintering accelerator is added, improvement of the sintering property according to addition of the sintering accelerator is not properly exhibited. When more than 5 parts by weight of the sintering accelerator is added, excessive liquid reaction is in progress such that rapid crystallization occurs, and thus the mechanical properties can be degraded.

Further, in addition to the sintering accelerator, one or more sintering aids can be contained. For example, a boron compound having a melting point of 600°C or less such as boric acid, lithium tetraborate, boron oxide, or ammonium borate, or one or more oxidizers selected from the group consisting of organic peroxides, inorganic peroxides, and inorganic acids can be contained.

The boron compound can improve a dispersing property between ceramic grains. The oxidizer forms coating over surfaces of ceramic grains to inhibit cohesion of the ceramic grains and improves the dispersing property so as to induce uniform growth of the ceramic grains. Hence, it is possible to significantly improve the mechanical properties of the manufactured stud, and thus it is desirable to use the sintering aids. In particular, in the case of oxidizer, the oxidizer maintains a dispersing state of the ceramic grains although the oxidizer is removed or combusts in the sintering process, and thus it is more desirable to use the oxidizer.

Examples of the organic peroxides of the oxidizers can include diisobutyryl, cumene peroxyneodecanoate, 1,1,3,3-tetramethylbutyl peroxyneodecanoate, di-n-propyl peroxydicarbonate, tert-amyl peroxyneodecanoate, di-(2-ethylhexyl) peroxydicarbonate, tert-butyl peroxyneodecanoate, di-n-butyl peroxydicarbonate, 1,1,3,3-tetramethylbutyl peroxypivalate, tert-butyl peroxyneoheptanoate, tert-amyl peroxypivalate, tert-butyl peroxypivalate, di-(3,5,5-trimethylhexanoyl) peroxide, tert-butyl-peroxy-2-ethylhexanoate, tert-butyl peroxyisobutyrate, 1,1-di-(tert-butylperoxy)-3,3,5-trimethylcyclohexane, 1,1-di-(tert-butylperoxy)-cyclohexane, tert-butyl-peroxy-3,5,5-trimethylhexanoate, 2,2-di-(tert-butylperoxy)-butane, tert-butyl peroxyisopropyl carbonate, tert-butyl peroxyacetate, 2,5-dimethyl-2,5-di(2-ethylhexanoylperoxy)-hexane, 1,1,3,3-tetramethylbutyl-peroxy-2-ethylhexanoate, tert-amyl-peroxy-2-ethylhexanoate, tert-butyl peroxydiethyl acetate, tert-amyl-peroxy-2-ethylhexyl carbonate, tert-butyl-peroxy-2-ethylhexyl carbonate, tert-butyl peroxybenzoate, di-tert amyl peroxide, 2,5-dimethyl-2,5-di-(tert-butylperoxy)-hexane, tert-butylcumyl peroxide, 2,5-dimethyl-2,5-di(tert-butylperoxy)hexine-3, di-tert-butyl peroxide, 3,6,9-triethyl-3,6,9-trimethyl-1,4,7-triperoxonane, di-isopropylbenzene monohydroperoxide, p-mentane hydroperoxide, cumene hydroperoxide, dicumyl peroxide, 1,1,3,3-tetramethylbutyl hydroperoxide, and the like.

Examples of the inorganic peroxides of the oxidizers can include hydrogen peroxide, ammonium peroxide, monomethylammonium peroxide, dimethylammonium peroxide, trimethylammonium peroxide, monoethyl ammonium peroxide, diethylammonium peroxide, triethylammonium peroxide, monopropylammonium peroxide, diprophylammonium peroxide, tripropylammonium peroxide, monoisopropylammonium peroxide, diisopropylammonium peroxide, triisopropylammonium peroxide, monobutylammonium peroxide, dibutylammonium peroxide, tributylammonium peroxide, lithium peroxide, sodium peroxide, potassium peroxide, magnesium peroxide, calcium peroxide, barium peroxide, ammonium perborate, lithium perborate, potassium perborate, sodium perborate, and the like.

An example of the inorganic acid of the oxidizers can include phosphoric acid as the inorganic acid containing oxygen.

It is desirable that 0.01 to 1 part by weight of the sintering aid be contained with respect to 100 parts by weight of total amount of ceramics. When less than 0.01 parts by weight of the sintering aid is added, a physical-property improving effect according to addition of the sintering aid is not properly exhibited. When more than 1 part by weight of the sintering aid is added, voids are formed in the stud due to removal of the sintering aid during sintering, and thus compressive strength can be significantly reduced.

The tire stud can be manufactured by sintering the ceramics as described above. At this point, the ceramic grains are densified by a driving force for movement of substances due to a reduction in surface and interface energy at a high temperature in the sintering process, and the grain growth is promoted.

In the present invention, a sintering method used in manufacturing of the tire stud is not limited, and a pressureless sintering method, a pressurized sintering method, a spark plasma sintering method, and a reaction sintering method are all applicable. The pressureless sintering method is a common sintering method, in which a molded body is subjected to a heat treatment at a high temperature in an air or inert gas atmosphere to be densified. The pressurized sintering method is a method in which pressure is applied from the outside of a sintering body to perform densification. The spark plasma sintering method is a method in which densification is performed at a low temperature by applying pressure to a sintering body and causing a high-current pule to flow at the same time. The reaction sintering method is a method in which movement is induced from the outside to the inside of a sintering body in a sintering process.

In the present invention, it is more desirable to use the pressurized sintering method as the sintering method. For example, in the pressurized sintering method, after a carbon mold is filled with ceramic powder, pressure is applied to a surface of a sintering body by using a carbon piston or by gas pressure. In this case, movement of substances can be promoted, and densification can be performed at a temperature relatively lower than that in the pressureless sintering method.

In the present invention, specifically, it is desirable to perform the sintering under pressure of 1 to 50 MPa at a temperature of 1,500 to 2,000°C for one to three hours. In the above-described condition, movement of the ceramic grains, prevention of cohesion and promotion of uniform dispersion of the sintering aid, and promotion of movement of substances are in progress, and thus it is possible to manufacture a still more uniform stud.

The tire stud according to the present invention can be coupled to the pin to be inserted into the tire. In this case, the manufacturing method is not limited; however, the manufacturing method, for example, can include:
a) a step of manufacturing a fastening portion as a female screw provided inside a tire curing mold;
b) a step of manufacturing the pin having a cylindrical rod shape of which an upper part is manufactured as a male screw and a lower part is cylinder-shaped flat surface;
c) a step of fastening the male screw of the pin into the fastening portion;
d) a step of fitting and fixing the ceramic stud into the lower portion of the pin; and
e) a step of performing the tire curing process.

The tire stud manufactured according to the present invention has a good braking property through a repeated friction effect against the ground surface. In addition, by improving the sintering process through the sintering condition and sintering additive of the ceramics, it is not only prevents from being damaged, worn, deformed, or the like due to an external force while lowering residual stress, but also exhibits the property of restoring the strength of ceramics by crack healing.

Hereinafter, the present invention will be described in more detail with reference to examples and comparative examples. However, the following examples and comparative examples are provided only as one of embodiments, and the present invention is not limited by the examples.

Physical properties of a sample manufactured in accordance with the examples and the comparative examples are measured as follows.

### (Surface Crack and Strength Change)

A Vickers hardness tester (TVK, 5030, Indentec, UK) was introduced to a center portion of a surface of a test piece. At this point, a test was conducted under conditions of press-fitting loads of 24.5 N and 196 N at a temperature of 1,300°C for one hour after introduction, and, in order to check the crack healing effect depending on a heat treatment environment, the test was conducted in a vacuum atmosphere of 1 × 10⁻⁴ torr and in the air. Here, a heating rate of 5°C/min was applied, and a reactor was cooled during cooling. This above-described process was set as one cycle, and the process was repeated three times.

A surface crack was observed by a field emission scanning electron microscope (FE-SEM), lengths of a crack was measured (unit: µm) before and after the heat treatment, and a ratio (after heat treatment/before heat treatment) was calculated. Here, a three-point bending test for evaluating the strength was conducted by using a material universal testing machine (MICRO350, load cell 500 Kg, Testometric, UK), in which a crosshead speed was 0.5 mm/min, a span length was 16 mm, and a temperature was the room temperature.

### (Example 1)

Aluminum oxide (Buehler, USA) having an average grain size of 0.3 µm and silicon carbide (Marketech, USA) having an average grain size of 0.5 µm were used as ceramic materials, and amounts of 70 wt% and 30 wt% were added, respectively. Both powders were mixed with alcohol and were subjected to a ball-mill treatment for 48 hours, and a mixture obtained after the ball-mill treatment was completely dried and sifted with a 100-mesh sieve. The prepared mixture was put in a graphite mold and was pressurized and sintered at 1,800°C at a pressure of 35 MPa for one hour, and a sample was completed. A surface of the completed sample was subjected to mirror polishing, and then physical properties of the sample were measured and were shown in Table 1.

### (Example 2)

A sample was manufactured in the same method as that in Example 1 except that 3 parts by weight of yttrium oxide (Y₂O₃) was further mixed as the sintering accelerator with respect to 100 parts by weight of total amount of ceramics in mixing of ceramic materials. Physical properties of the manufactured sample were measured and were shown in Table 1.

### (Example 3)

A sample was manufactured in the same method as that in Example 2 except that 0.05 parts by weight of ammonium borate was further mixed as the sintering aid in mixing of ceramic materials. Physical properties of the manufactured sample were measured and were shown in Table 1.

### (Example 4)

A sample was manufactured in the same method as that in Example 3 except that 0.1 parts by weight of a mixture of ammonium borate and diisobutyryl peroxide mixed by a weight ratio of 1 : 1 was further mixed as the sintering aid with respect to 100 parts by weight of total amount of ceramics in mixing of ceramic materials. Physical properties of the manufactured sample were measured and were shown in Table 1.

### (Example 5)

A sample was manufactured in the same method as that in Example 1 except that contents of aluminum oxide and silicon carbide were adjusted to 90 wt% and 10 wt%, respectively. Physical properties of the manufactured sample were measured and were shown in Table 1 to be provided below.

### (Example 6)

A sample was manufactured in the same method as that in Example 1 except that pressureless sintering was performed at 1,200°C. Physical properties of the manufactured sample were measured and were shown in Table 1 to be provided below.

**[Table 1]**

| | Surface crack | Strength change (MPa) | | | | | |
|---|---|---|---|---|---|---|---|
| | | Initial strength | | | Strength after heat treatment | | |
| | | 0 N | 24.5 N | 196 N | 0 N | 24.5 N | 196 N |
| Example 1 | 0.81 | 475 | 213 | 187 | 759 | 612 | 497 |
| Example 2 | 0.52 | 497 | 256 | 201 | 836 | 655 | 524 |
| Example 3 | 0.48 | 522 | 291 | 243 | 857 | 683 | 541 |
| Example 4 | 0.43 | 548 | 334 | 270 | 881 | 710 | 569 |
| Example 5 | 0.92 | 456 | 194 | 148 | 746 | 589 | 452 |
| Example 6 | 0.99 | 453 | 201 | 153 | 694 | 587 | 460 |

As shown in Table 1 provided above, the tire stud manufactured according to the present invention is found to satisfy the mechanical properties and to attain a surface-crack healing property. In particular, after the heat treatment, a crack healing rate is found to be much higher in Example 2 in which the sintering accelerator is added, than in Example 1. In Examples 3 and 4 in which the sintering aid is added, the initial strength and the strength after the heat treatment are found to remarkably increase regardless of the load, while the surface-crack healing properties are maintained.

On the other hand, both in Example 5 in which the contents of aluminum oxide and silicon carbide are adjusted to 90 wt% and 10 wt%, respectively, and in Example 6 in which the sintering temperature is lower than the other examples, the surface crack remains as it is, and the initial strength and the strength after the heat treatment are found to be less satisfied than in the other examples.

### Industrial Applicability

A tire stud according to the present invention is manufactured from ceramic having the above composition, and thus has characteristics of causing the strength of ceramics to recover through crack healing while lowering residual stress by improving a sintering process. In addition, abrasion resistance is improved by further adding a sintering aid and an organic oxide during sintering, and thus friction with a road surface can always be maintained to be constant and life span can be greatly increased.

## Claims

1. A tire stud comprising:
a main body;
a support positioned at a lower end of the main body; and
a fastening portion that is positioned at an upper end of the main body and is formed to have one surface sunken toward a center of the main body by a certain degree or more,
wherein the main body, the support, and the fastening portion are manufactured by putting one or two or more ceramics selected from the group consisting of silicon oxide, silicon carbide, silicon nitride, silicon alumina nitride, aluminum oxide, zirconium oxide, and cordierite in a mold and sintering.

2. The tire stud according to claim 1,
wherein the ceramics are obtained by mixing 50 to 85 wt% of aluminum oxide and 15 to 50 wt% of one or two more ceramics selected from the group consisting of silicon oxide, silicon carbide, silicon nitride, silicon alumina nitride, zirconium oxide, and cordierite.

3. The tire stud according to claim 2,
wherein, with respect to 100 parts by weight of the ceramics, 0.1 to 5 parts by weight of one or two or more sintering aids selected from the group consisting of lanthanum aluminum oxide, yttrium aluminum oxide, rhenium-aluminum oxide, samarium-aluminum oxide, neodymium aluminum oxide, yttrium oxide, and scandium oxide are added.

4. The tire stud according to claim 1,
wherein the ceramics have an average grain size of 0.1 to 50 µm.

5. The tire stud according to claim 1,
wherein the main body, the support, and the fastening portion are manufactured by putting a ceramic in a mold and then sintering under pressure of 1 to 50 MPa at a temperature of 1,500 to 2,000°C for one to three hours.
